Europäisches Patentamt

European Patent Office

Office européen des brevets

(19)

(11) **EP 1 112 518 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **99942906.1**

(22) Anmeldetag: **23.08.1999**

(51) Int Cl.⁷: **G02B 6/16**, G02B 6/22

(86) Internationale Anmeldenummer:
**PCT/EP1999/006188**

(87) Internationale Veröffentlichungsnummer:
**WO 2000/014580 (16.03.2000 Gazette 2000/11)**

(54) **OPTISCHE SINGLE-MODE-LICHTLEITFASER**

SINGLE-MODE OPTICAL FIBER

FIBRE OPTIQUE MONOMODE

(84) Benannte Vertragsstaaten:
**AT BE CH CY DE DK ES FI FR GB GR IE IT LI LU MC NL PT SE**

(30) Priorität: **02.09.1998 DE 19839870**

(43) Veröffentlichungstag der Anmeldung:
**04.07.2001 Patentblatt 2001/27**

(73) Patentinhaber: **Deutsche Telekom AG
53113 Bonn (DE)**

(72) Erfinder:
• **DULTZ, Wolfgang
D-65936 Frankfurt/M. (DE)**
• **BONESS, Reiner
D-01640 Coswig (DE)**
• **VOBIAN, Joachim
D-64367 Mühltal (DE)**

(74) Vertreter: **Mierswa, Klaus
Rechtsanwalt + Patentanwalt,
Friedrichstr. 171
68199 Mannheim (DE)**

(56) Entgegenhaltungen:
**EP-A- 0 721 119          EP-A- 0 883 002
US-A- 5 483 612**

• **YADLOWSKY M J ET AL: "OPTICAL FIBERS AND AMPLIFIERS FOR WDM SYSTEMS" PROCEEDINGS OF THE IEEE,US,IEEE. NEW YORK, Bd. 85, Nr. 11, Seite 1765-1779 XP000755847 ISSN: 0018-9219**

**Beschreibung**

Technisches Gebiet:

Die Erfindung betrifft eine optische Single-Mode-Lichtleitfaser mit geringer Dispersion für den Wellenlängenmultiplexbetrieb (WDM) optischer Übertragungsstrecken, bestehend aus einem zentralen Faserkern, wenigstens zwei inneren Fasermantelschichten und einer äußeren Fasermantelschicht (Triple-Clad-Faser), wobei das Brechungsindexprofil n(r) der Faser als Funktion des Faserradius r nicht konstant ist.

Stand der Technik:

Um immer größere Datenraten über Single-Mode-Fasern übertragen zu können, gewinnt das Wellenlängenmultiplexverfahren (WDM) eine immer größere Bedeutung. Beim WDM-Betrieb einer optischen Übertragungsstrecke werden bis zu 80 bis 100 Kanäle mit der Spektralbreite $\Delta\lambda$ über eine Faser übertragen. Die Zahl der über eine Faser gegebener Länge übertragbaren Kanäle wird im wesentlichen von der Faserdämpfung und der Dispersion bei den verwendeten Wellenlängen begrenzt. Bedingt auch durch den zur Sicherung der Übertragungsqualität notwendigen Kanalabstand wird insgesamt eine große spektrale Breite der Faser für die Übertragung benötigt und benutzt.

Die in den optischen Netzwerken der Telekommunikations-Gesellschaften verlegten Glasfaserkabel enthalten Lichtleitfasern auf Quarzglasbasis, die aus einem Faserkern und einem Fasermantel bestehen. Das Dämpfungsminimum von Fasern auf Quarzglasbasis liegt im dritten optischen Fenster, also im Spektralgebiet um 1550 nm. In diesem Wellenlängenbereich stehen des weiteren leistungsfähige optische Verstärker zur Verfügung, z.B. Erbium-dotierte Faserverstärker (Erbium-doped fiber amplifiers, EDFA), welche innerhalb des optischen Netzwerks zur Regenerierung der Übertragungssignale nach einem bestimmten Streckenabschnitt dienen. Aus diesen Gründen ist das gegenwärtig verwendete WDM-System für das 3. optische Fenster konzipiert.

Das Problem bereits verlegter Glasfasern ist die Dispersion. Für normale Standardfasern liegt die Dispersionsnullwellenlänge $\lambda_0$, bei welcher keine oder nur sehr geringe Dispersion optischer Signale auftritt, bei $\lambda_0$ = 1310 nm. Das bedeutet, daß ein mit der Wellenlänge von etwa $\lambda_0$ übertragenes Signal nicht oder nur wenig verzerrt wird und insbesondere die Pulsbreite erhalten bleibt; allerdings ist die Dämpfung in diesem Bereich höher als im 3. optischen Fenster. Die chromatische Dispersion D($\lambda$) ist bei Standardfasern stark wellenlängenabhängig und beträgt für $\lambda$ = 1550 nm etwa 16 bis 17.5 ps/(km*nm). Wird ein optisches Signal mit Wellenlängen um 1550 nm übertragen, wird die Pulsbreite dispersionsbedingt vergrößert. Dieser Effekt steht einer hohen Übertragungskapazität entgegen; eine chromatische Dispersion von 16 bis 17.5 ps/(km*nm) ist viel zu hoch für ultrahochbitratige Systeme.

Um dennoch verlegte Standardfasern im 3. optischen Fenster nutzen zu können, muß die Dispersion kompensiert werden, was nur mit großem Aufwand gelingt. Dazu sind beispielsweise aus der US 5,568,583 dispersionskompensierende Fasern bekannt, welche bei 1550 nm eine sehr hohe negative Dispersion von D $\approx$ -100 ps/(km nm) aufweisen. Diese Dispersionseigenschaften werden durch Erhöhen des Brechungsindex des Faserkerns und Erniedrigen des Brechungsindex einer ersten Mantelschicht gegenüber dem Brechungsindex des äußeren Fasermantels, der aus Quarzglas besteht, erreicht. Zur Anwendung wird die dispersionskompensierende Faser an eine Standardfaser angespleißt, so daß das durch die positive Dispersion auseinandergezogene Signal beim Durchlaufen der Kompensationsfaser durch die negative Dispersion wieder komprimiert wird. Eine betragsmäßig hohe Dispersion ist erforderlich, um die Länge der Kompensationsfaser so gering wie möglich zu halten.

Des weiteren ist bekannt, für das 3. optische Fenster spezielle dispersionsverschobene (dispersionshifted, DS-) Fasern zu verwenden, welche eine Dispersionsnullwellenlänge von etwa 1550 nm haben. Eine solche DS-Faser ist beispielsweise aus der US 5,675,688 bekannt. Die Verschiebung der Nullwellenlänge wird grundsätzlich wie bei den dispersionskompensierenden Fasern durch ein bestimmtes Brechungsindexprofil erreicht.

Diese DS-Fasern weisen jedoch für den WDM-Betrieb entscheidende Nachteile auf: Die Dispersionskurve D($\lambda$) schneidet zwar die Wellenlängenachse bei etwa $\lambda_0$ = 1550 nm, ist jedoch gegenüber der Dispersionskurve von Standardfasern lediglich zu höheren Wellenlängen D-Werten hin verschoben. Damit hat sie im Bereich von 1550 nm einen großen Anstiegswinkel bzw. eine große Steigung S($\lambda_0$), die etwa bei 0.09 ps/ km*nm$^2$ liegt. Entsprechendes gilt auch für 1300 nm-Standardfasern. Das bedeutet, daß für $\lambda$-Werte, die verschieden von $\lambda_0$ sind, mit erheblichen Dispersionswerten zu rechnen ist, die mit dem Abstand von $\lambda_0$ nahezu linear wachsen. Das ist natürlich ein gravierender, das nutzbare WDM-Spektrum begrenzender Nachteil, der überwunden werden muß. Der zweite Nachteil der DS-Fasern ist die relativ kleine effektive Fläche $A_{eff}$ der Faser, d. h. die kleinen Modenfelddurchmesser MFD (Petermann II) und $MFD_{eff}$. Diese vergrößern den nichtlinearen Brechungsindex (Kerr-Koeffizient) der Faser und damit nichtlineare Effekte (Brillouin- und Ramanstreuung), welche die Übertragungsqualität nachteilig beeinflussen.

Zur Überwindung des Dispersionsproblems im dritten optischen Fenster sind des weiteren Monomode-Lichtleitfasern entwickelt worden, welche im relevanten Spektralbereich eine geringe chromatische Dispersion sowie geringe Dämpfung haben und die Standardfasern ersetzen sollen. Durch den Firmenprospekt "TrueWave™ Single Mode Fiber" der AT&T Network Systems ist eine Faser bekannt, welche für Wellenlängen von etwa 1540 bis 1560 nm eine chromatische Dispersion D von $0.8 \leq D \leq 4.6 ps/(km*nm)$ bei einem Modenfeldradius von 4.2 μm aufweist. Das Brechzahlprofil n(r) zeigt qualitativ ein Dreieckprofil des Kerns, wobei das Dreieck auf einem breiten Podest sitzt, dessen Höhe etwa ein Zehntel der Dreieckshöhe ausmacht. Bezüglich des Quarzglaswertes n=1.4573 (äußerer Mantelbereich) treten nur positive n(r)-Werte auf, wenn man n=1.4573 als Nullniveau annimmt. Auf Absenkung des Brechzahlniveaus, z.B. durch Fluorinkorporation, wird verzichtet.

Des weiteren ist aus der EP 0851 245 A2 eine dispersionsverschobene Faser bekannt, die für Wellenlängen um 1550 nm eine Dispersion von 1,0 bis 4,5 ps/ nm/km mit einer Steigung der Disperionskurve von weniger als 0,13 ps/nm²/km und einer effektiven Fläche von wenigstens 70 μm² aufweist. Die Faser weist einen in vier Schichten mit jeweils unterschiedlichen Brechzahlniveau unterteilten Faserkern auf, an den sich die äußere Fasermantelschicht anschließt, es handelt sich somit um eine Quadruple-Clad-Faser. Eine weitere Quadruple-Clad-Faser mit wenigstens vier Niveaus mit flacher Dispersionskurve (0,03 ps/nm²/km) ist aus der WO 97/33188 bekannt. Um die gewünschten optischen Eigenschaften zu erreichen, ist eine starke Überhöhung des inneren Kernniveaus gegenüber dem Bezugsbrechungsindex des äußeren Mantelniveaus notwendig. Dabei sind wegen der Unterbringung von vier Schichten enge Radiustoleranzen einzuhalten. Ein im Bereich von nur wenigen Mikrometern stark variierendes Brechzahlprofil mit engen Radiustoleranzen ist regelmäßig schwierig herzustellen. Zur Herstellung eignet sich ein Plasma-CVD-Verfahren, bei welchem derart feine Schichtstrukturen präzise aufgetragen werden können. Dieses Verfahren ist aufwendig und teuer.

Das im 3. optischen Fenster nutzbare Spektrum wird begrenzt durch den spektralen Arbeitsbereich der eingesetzten optischen Verstärker (EDFA), der etwa zwischen 1510 und 1570 nm liegt. Da aber einmal installierte Glasfasern viele Jahre zur Verfügung stehen müssen, ist es günstig, der technischen Entwicklung vorzugreifen und den nutzbaren Arbeitsbereich der Fasern deutlich größer anzusetzen, etwa zwischen 1400 und 1700 nm.

Aus der EP 0 721 119 A1 ist eine Faser bekannt, die einen in drei oder vier Schichten mit jeweils unterschiedlichem Brechzahlniveau unterteilten Faserkern aufweist, wobei der innerhalb jeder Schicht auftretende Maximalwert der Abweichung der Brechzahl von einem Bezugswert angegeben wird und die Dispersion im Wellenlängenbereich von 1400 bis 1700 nm Werte zwischen -7 ps/(nm•km) und +5 ps/(nm•km) annimmt. Gemäß einem Ausführungsbeispiel besteht dabei der Faserkern aus drei Bereichen, nämlich einem Zentralbereich mit einem Radius von ca. 3,5 μm und einem maximalen relativen Brechungsindex von 0,9%, einer ersten Ringzone mit einer Dicke von ca. 4 μm und einem

relativen Brechungsindex von ca. -0,1% sowie einer zweiten Ringzone mit einer Dicke von ca. 1,5 μm und einem maximalen relativen Brechungsindex von 0,25%.

Technische Aufgabe:

Der Erfindung liegt die Aufgabe zugrunde, eine Single-Mode-WDM-Faser mit mehreren Schichten mit jeweils unterschiedlichem Brechzahlniveau zur Verwendung in einem ultrahochbitratigen Übertragungssystem zur Verfügung zu stellen, welche bei einem technisch einfach und kostengünstig herstellbaren Faserprofil einen nutzbaren Arbeitsbereich von vorzugsweise zwischen 1400 nm und 1700 nm, eine normal große effektive Fläche bzw. Modenfeldradius und einen Dipersionsverlauf D(λ) aufweist, der im betrachteten Spektralgebiet möglichst flach ist und D(λ)-Werte mit einem Betrag von maximal 3,7 ps/(nm•km) annimmt.

Offenbarung der Erfindung:

Die Aufgabe wird gelöst durch eine optische Single-Mode-Lichtleitfaser mit geringer Dispersion für den Wellenlängenmultiplexbetrieb (WDM) einer optischen Übertragungsstrecke, bestehend aus einem zentralen Faserkern mit dem Radius $r_1$, zwei inneren Fasermantelschichten mit dem Außenradius $r_2$ bzw. Außenradius a mit $a > r_2$ und einer äußeren Fasermantelschicht, wobei

- für die Radien $r_1$, $r_2$ und a die Beziehungen $8,0 μm \leq a \leq 16 μm$, $0,15 \leq r_1/a \leq 0,4$, und $0,65 \leq r_2/a \leq 0,85$ gelten und das Brechungsindexprofil n(r) der Faser als Funktion des Faserradius r nicht konstant ist,
- die äußere Fasermantelschicht, d.h. für den Bereich r > a, ein relatives Brechungsindexprofil Δ(r) mit

$$\Delta(r) = \frac{1}{2}\left(\frac{n(r)^2}{n_c^2} - 1\right)$$

aufweist, für welches $\Delta(r) \approx 0$ gilt, wobei $n_c$ ein konstanter Bezugsbrechungsindex ist
- und für das relative Brechungsindexprofil Δ(r) mit

$$\Delta(r) = \frac{1}{2}\left(\frac{n(r)^2}{n_c^2} - 1\right)$$

der Faser in der ersten inneren Fasermantelschicht, d.h. für $r_1 < r \leq r_2$, $0 \geq \Delta(r) \geq \Delta_1$ gilt, wobei $-2,0 \cdot 10^{-3} \leq \Delta_1 \leq -0,6 \cdot 10^{-3}$;

dadurch gekennzeichnet,
daß für das relative Brechungsindexprofil Δ(r) mit

$$\Delta(r) = \frac{1}{2}\left(\frac{n(r)^2}{n_c^2} - 1\right)$$

der Faser folgendes gilt:

    a) im Faserkern, d.h. für $r \leq r_1$, gilt $\Delta_0 \geq \Delta(r) \geq 0$, wobei $3{,}5 \bullet 10^{-3} \leq \Delta_0 \leq 6{,}0 \bullet 10^{-3}$;
    b) in der zweiten inneren Fasermantelschicht, d.h. für $r_2 < r \leq a$, gilt $\Delta_2 \geq \Delta(r) \geq 0$, wobei $1{,}0 \bullet 10^{-3} \leq \Delta_2 \leq 2{,}0 \bullet 10^{-3}$,

so daß die Faser im Wellenlängenbereich zwischen 1400 nm und 1700 nm einen Dispersionswert zwischen -1,6 und +3,7 ps/(nm•km) aufweist.

Dabei ist $n_c$ ein konstanter Bezugsbrechungsindex, nämlich die Brechzahl des äußeren Mantels, der im Regelfall aus Quarzglas mit $n_c = 1{,}4573$ besteht.

Der durch

$$\Delta(r) = \frac{1}{2}\left(\frac{n(r)^2}{n_c^2} - 1\right)$$

definierte relative Brechungsindex gibt für geringe Brechzahlunterschiede, die hier vorliegen, in guter Näherung die auf die Mantelbrechzahl bezogene absolute Brechzahländerung $n(r)-n_c$ an, da

$$\Delta(r) \approx \frac{n(r)-n_c}{n_c}.$$

Die erste innere Mantelschicht schließt sich unmittelbar an den Faserkern an und wird von der zweiten inneren Mantelschicht umschlossen. Abgeschlossen wird die Schichtenfolge durch die äußere Fasermantelschicht mit dem Bezugsbrechungsindex $n_c$. Somit handelt es sich bei der erfindungsgemäßen Faser im einfachsten Fall um eine Triple-Clad-Faser.

Der Faserkern hat ein $\alpha$-Profil ($\Delta(r) = \Delta_0(1-r^\alpha)$ mit $\alpha = 1...6$) oder ein Trapez-Profil oder weist einen konstanten Brechungsindex (RechteckProfil) auf. Die Brechungsindizes in den übrigen Schichten sind vorzugsweise konstant. Eine derartige Triple-Clad-Faser ist einfach und kostengünstig auch mit konventionellen Herstellungsverfahren herzustellen.

Der Radius $r_1$ liegt vorzugsweise zwischen 2,5 µm und 5,5 µm, besonders bevorzugt gilt $3{,}5\ \mu m \leq r_1 \leq 4{,}5\ \mu m$. Für den Radius $r_2$ sollten Werte zwischen 8 und 12 µm gewählt werden, vorzugsweise $9\ \mu m \leq r_2 \leq 11\ \mu m$. Für den Radius a gilt vorzugsweise $9\ \mu m \leq a \leq 15\ \mu m$. In einer weiteren bevorzugten Ausführung der Erfindung gilt $-1{,}2\cdot 10^{-3} \leq \Delta_1 \leq -0{,}6\cdot 10^{-3}$.

Eine besonders leicht zu realisierende Form des Kernprofils, d.h. für $r < r_1$, ist ein Rechteckprofil. Dabei ist der absolute und relative Kernbrechungsindex für $r < r_1$ in etwa konstant und fällt im Bereich $r \approx r_1$ auf den Wert der ersten inneren Mantelschicht ab. Die drei Mantelschichten weisen vorzugsweise ebenfalls einen konstanten Brechungsindex auf, welcher sich in den oben dafür angegebenen Bereichen bewegt.

In einer besonders bevorzugten Ausführungsform werden für die Faser mit Rechteckprofil des Faserkerns folgende Parameter gewählt:

    a) $3{,}7\cdot 10^{-3} \leq \Delta_0 \leq 4{,}6\cdot 10^{-3}$, vorzugsweise $\Delta_0 \approx 4{,}16\cdot 10^{-3}$;
    b) $-1{,}8\cdot 10^{-3} \leq \Delta_1 \leq -1{,}4\cdot 10^{-3}$, vorzugsweise $\Delta_1 \approx -1{,}59\cdot 10^{-3}$;
    c) $1{,}6\cdot 10^{-3} \leq \Delta_2 \leq 1{,}9\cdot 10^{-3}$, vorzugsweise $\Delta_2 \approx 1{,}75 \cdot 10^{-3}$;
    d) $9{,}4\ \mu m \leq a \leq 11{.}4\ \mu m$, wobei vorzugsweise $a \approx 10{.}4\ \mu m$, $r_1/a \approx 0{,}3$ und $r_2/a = 0{,}8$ gilt.

Eine weitere bevorzugte Form des Kernprofils ist ein Dreieckprofil, wobei $\Delta(r)$ den maximalen relative und damit auch absoluten Brechungsindex $\Delta_0$ im Bereich des Fasermittelpunkts annimmt und bis $r \approx r_1$ linear auf den Wert der ersten inneren Mantelschicht abfällt. Daran schließen sich vorzugsweise wiederum Mantelschichten mit konstantem Brechungsindex $\Delta_1$, $\Delta_2$ bzw. $\Delta_3 = 0$ an.

In einer weiteren besonders bevorzugten Ausführungsform werden für die Faser mit Dreieckprofil des Faserkerns folgende Parameter gewählt:

    a) $4{,}7\cdot 10^{-3} \leq \Delta_0 \leq 5{,}8\cdot 10^{-3}$, vorzugsweise $\Delta_0 \approx 5{,}31\cdot 10^{-3}$;
    b) $-1{,}0\cdot 10^{-3} \leq \Delta_1 \leq -0{,}8\cdot 10^{-3}$, vorzugsweise $\Delta_1 \approx -0{.}9\cdot 10^{-3}$;
    c) $1{,}1\cdot 10^{-3} \leq \Delta_2 \leq 1{,}4\cdot 10^{-3}$, vorzugsweise $\Delta_2 \approx 1{,}25\cdot 10^{-3}$;
    d) $12{,}9\ \mu m \leq a \leq 14{,}9\ \mu m$, wobei vorzugsweise $a \approx 13{,}9\ \mu m$, $r_1/a \approx 0{,}3$ und $r_2/a \approx 0{,}8$ gilt.

Eine weitere bevorzugte Form des Kernprofils ist ein Parabelprofil des relativen oder des absoluten Brechungsindex, wobei der maximale relative und damit auch absolute Brechungsindex $\Delta_0$ im Bereich des Fasermittelpunkts angenommen wird und $\Delta(r)$ bis $r \approx r_1$ etwa parabelförmig auf den Wert der ersten inneren Mantelschicht abfällt. Daran schließen sich vorzugsweise wiederum Mantelschichten mit konstantem Brechungsindex $\Delta_1$, $\Delta_2$ bzw. 0 an. Ein stetiger Übergang der Brechzahlen ineinander erzeugt geringere mechanische Spannungen, daher ist ein Parabelprofil des Faserkerns unter Umständen stabiler als ein Rechteckprofil.

In einer weiteren besonders bevorzugten Ausführungsform werden für die Faser mit Parabelprofil des Faserkerns folgende Parameter gewählt:

    a) $3{,}9\cdot 10^{-3} \leq \Delta_0 \leq 4{,}8\cdot 10^{-3}$, vorzugsweise $\Delta_0 \approx 4{,}34\cdot 10^{-3}$;

b) $-1{,}1 \cdot 10^{-3} \leq \Delta_1 \leq -0{,}9 \cdot 10^{-3}$, vorzugsweise $\Delta_1 \approx -1{.}03 \cdot 10^{-3}$;

c) $1{,}3 \cdot 10^{-3} \leq \Delta_2 \leq 1{,}7 \cdot 10^{-3}$, vorzugsweise $\Delta_2 \approx 1{,}5 \cdot 10^{-3}$;

d) $12{,}0\ \mu m \leq a \leq 14{,}0\ \mu m$, wobei vorzugsweise $a \approx 13{,}0\ \mu m$, $r_1/a \approx 0{,}3$ und $r_2/a \approx 0{,}8$ gilt.

Die Profilangaben müssen als theoretische Soll-Vorgaben verstanden werden. In der Praxis lassen sich scharfe Brechzahlsprünge in der Regel nicht exakt realisieren, sondern alle Ecken eines theoretischen Profils werden abgerundet. Die Brechzahlverläufe werden durch das Abscheiden dünner Schichten erzeugt, so daß selbst ein theoretisch konstantes n(r) in der Praxis einen wellenförmigen Verlauf hat. Die oben genannten Ausführungen beziehen sich daher auf die Zielvorgaben. Des weiteren weist beispielsweise auch ein theoretisch rechteckförmiges Kernprofil bei r = 0 oft einen sogenannten Mitten-Dip, einen Abfall des Brechungsindex, und damit einen lediglich durch ein Rechteck approximierbaren Brechzahlverlauf auf. Allerdings läßt sich der Mitten-Dip durch verbesserte Technologie des Herstellungsprozesses vermeiden.

Die geschilderten Profile lassen sich in herkömmlicher Modified Chemical Vapor Deposition (MCVD) -Technik herstellen.

Die erfindungsgemäße Faser hat eine chromatische Dispersion D, welche für Wellenlängen von 1400 nm bis 1700 nm im Bereich zwischen -1,6 bis 3,7 ps/(nm km) und damit wesentlich unterhalb des Wertes von Standard-Quarzglasfasern liegt. Die einfachen Strukturen und relativ großen Feldradien garantieren bei sorgfältiger Faserherstellung auch kleine Polarisationsmodendispersion (PMD) -Werte von weniger als 0,5 ps/km$^{1/2}$.

Die Faser besteht vorzugsweise im wesentlichen aus Quarzglas, welches zur Erhöhung oder Absenkung des Brechungsindex im Kern und in den Mantelschichten mit entsprechenden Materialien, vorzugsweise Germanium bzw. Fluor, dotiert ist. Da die zur Erreichung der Brechungsindexunterschiede notwendigen Kerndotierungen sich im üblichen Rahmen bewegen, ist nicht zu erwarten, daß die Dämpfungswerte dieser WDM-Fasern höher sind als der derzeitige Standard.

Des weiteren sind die Kernradien und insbesondere die effektiven Radien $w_{eff}$ der erfindungsgemäßen Faser mit den entsprechenden Werten von Standardfasern vergleichbar. Da diese Größen die Polarisationsmodendispersion und die Größe nichtlinearer Effekte bestimmen, sind sowohl die PMD als auch der nichtlineare Kerrkoeffizient vergleichbar mit Standardfasern.

Mit erfindungsgemäßen Fasern läßt sich die Übertragungsqualität und Übertragungsleistung einer optischen Übertragungsstrecke gegenüber Standard-Lichtleitfasern erhöhen. Weiterhin kann wegen der durch die geringer Dispersion stabileren Signalform die Glasfaserstrecke zwischen Sender und Empfänger bzw. Verstärkerstation verlängert werden, wodurch Kosten gespart werden. Die kleine Impulsverbreiterung erlaubt die Übertragung wesentlich höherer Datenraten, die Vorraussetzung für ultrahochbitratige Übertragungssysteme

Kurzbeschreibung der Zeichnung, in der zeigen:

Figur 1     ein Brechungsindexprofil Δr) mit rechteckförmiger Kernstruktur;

Figur 2     die Dispersion und die Feldradien $w_n$, $w_f$ und $w_{eff}$ als Funktion der Wellenlänge für das Profil aus Fig. 1

Figur 3     in Brechungsindexprofil $\Delta(r)$ mit parabelförmiger Kernstruktur;

Figur 4     die Dispersion und die Feldradien $w_n$, $w_f$ und $w_{eff}$ als Funktion der Wellenlänge für das Profil aus Fig. 3;

Figur 5     in Brechungsindexprofil $\Delta(r)$ mit dreieckförmiger Kernstruktur;

Figur 6     die Dispersion und die Feldradien $w_n$, $w_f$ und $w_{eff}$ als Funktion der Wellenlänge für das Profil aus Fig. 5.

Bevorzugte Ausführungsformen:

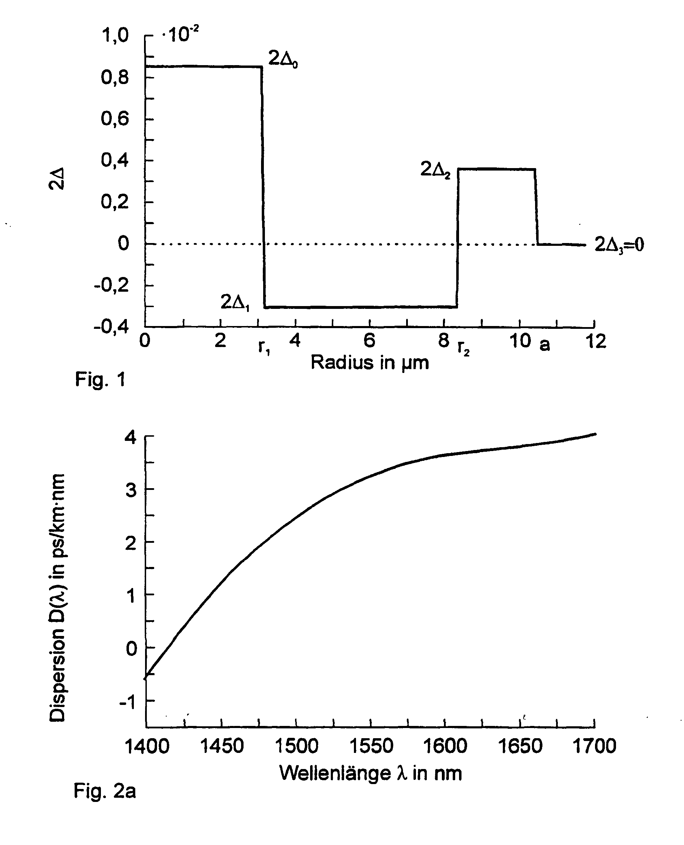

In den Figuren 1, 3 und 5 sind drei Faserprofile $\Delta(r)$ dargestellt, wobei der relative Brechungsindex

$$\Delta(r) = \frac{1}{2}\left(\frac{n(r)^2}{n_c^2} - 1\right)$$

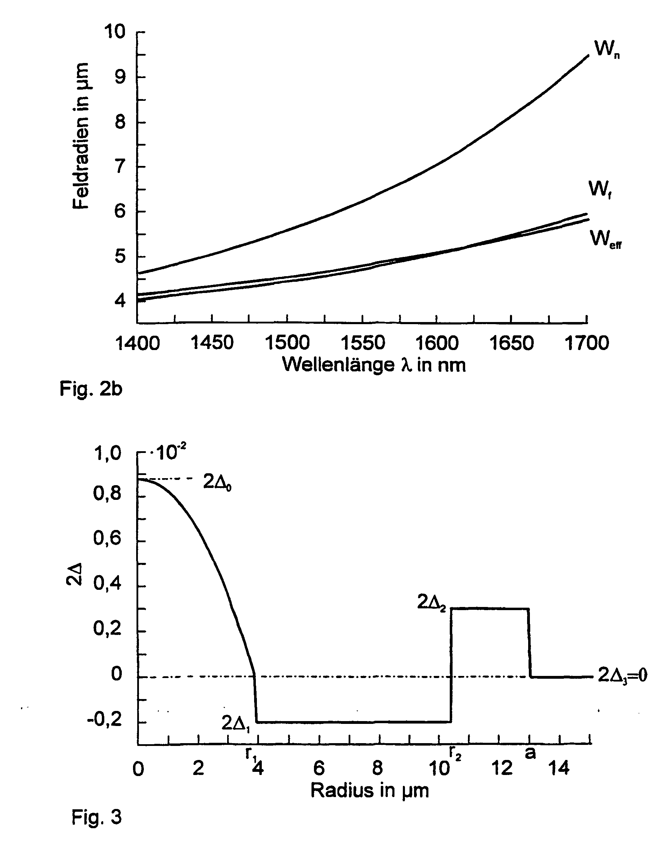

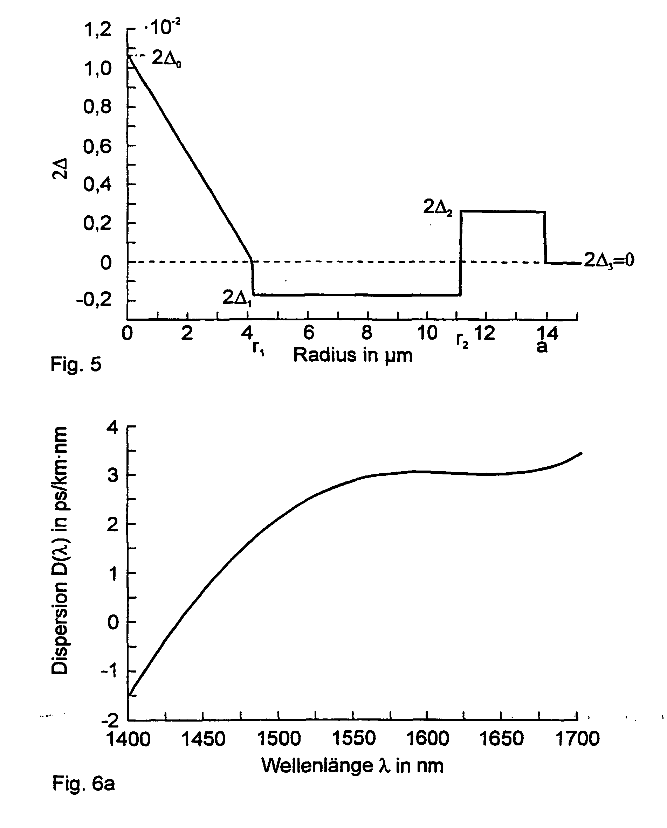

als Funktion des Faserradius r aufgetragen ist. Die so aufgebauten Fasern weisen die folgenden Dispersionswerte D auf und sind damit ideale, extrem breitbandige WDM-Fasern für den WDM-Betrieb im dritten optischen Fenster: $D(\lambda) \leq 3{,}3$ ps/km*nm (Profil 1, Fig. 1), $D(\lambda) \leq 2{,}8$ ps/km*nm (Profil 2, Fig.3) und $D(\lambda) \leq 3{,}1$ ps/km*nm (Profil 3, Fig.5) im Spektralbereich $1450 \leq \lambda \leq 1650$ nm.

Die dargestellten Profile sind wegen ihrer relativ einfachen Struktur (rechteck-, parabel-, dreieckförmiger Kernbereich, ansonsten Stufen) bequem mit der herkommlichen MCVD-Technik herstellbar. Die einfachen Strukturen und die großen Modenfeldradien garantieren bei sorgfältiger Faserherstellung kleine PMD-Werte ($<0{.}5$ps/km$^{1/2}$).

Fig. 1 zeigt ein Beispiel für eine erfindungsgemäßes Faserprofil. Bezugsniveau ist $2\Delta = 0$, also $n = n_c$ (Brechzahl des äußeren Mantelbereichs). Das Bezugsniveau ist als gestrichelte Linie eingezeichnet. Profil 1 ist ein Triple-Clad-Profil mit Rechteckprofil des Faserkerns und mit den folgenden charakteristischen Daten:

$2\Delta_0 = 8{,}36 \cdot 10^{-3}$ (Faserkern)

$2\Delta_1$ = -3,18·10⁻³ (erste innere Mantelschicht)
$2\Delta_2$ = 3,5·10⁻³ (zweite innere Mantelschicht)
$2\Delta_3$ = 0 (per Definition, äußere Mantelschicht)
Radien bzw. Radienverhältnisse a = 10,4μm, $r_1$/a = 0,3 und $r_2$/a = 0,8.

Die Faser ist beispielsweise auf Quarzglasbasis mit $n_c$ = 1,4573 ausgeführt. In diesem Fall entsprechen die genannten relativen Brechzahlen $\Delta_i$ folgenden realen Brechungsindizes:

$n_0$ = 1,4634 (Faserkern)
$n_1$ = 1,4550 (erste innere Mantelschicht)
$n_2$ = 1,4599 (zweite innere Mantelschicht)
$n_c$ = 1,4573 (äußere Mantelschicht)

Die Brechzahländerungen lassen sich, ausgehend von Quarzglas als Grundmaterial, durch Dotierung mit Germanium bzw. Fluor erreichen. Die dazu notwendigen Dotierungskonzentrationen der Implantate, insbesondere des Germaniums, sind dabei so gering, daß keine signifikante Erhöhung der Faserdämpfung auftritt, wie sie beispielsweise bei dispersionskompensierenden Fasern beobachtet wird. Des weiteren können Schwierigkeiten bei der Faserdotierung, die bei hohen Fluor-Konzentrationen auftreten, vermieden werden.

Die Grenzwellenlänge $\lambda_c$ wurde berechnet und beträgt $\lambda_c$ = 1216 nm. In Figur 2a ist der spektrale Verlauf der chromatischen Dispersion D($\lambda$) und in Figur 2b sind die spektralen Modenfeldradiuskurven $w_n$ (Petermann 1), $w_f$ (Petermann II) und $w_{eff}$ für das Profil 1 dargestellt. Die Werte wurden in einer Simulationsrechnung aus den Profildaten berechnet.

Die Dispersion D($\lambda$) liegt bei Wellenlängen um 1400 nm im leicht negativen Bereich und steigt auf Werte von maximal 3,6 ps/km·nm an, die bei Wellenlängen um 1700 nm erreicht werden. Zwischen $\lambda$ = 1550 und 1650 nm ist die Dispersion positiv (anormal) und nimmt von 2,8 bis 3,4 ps/km*nm zu, so daß die Dispersionskurve in diesem Bereich eine geringe Steigung $\Delta D/\Delta \lambda$ aufweist.

Die Modenfeldradien liegen im gesamten dargestellten spektralen Bereich zwischen 3,5 und 5 μm ($w_f$ und $w_{eff}$) bzw. zwischen 4 und 7 μm ($w_n$), also im Bereich wie Standardfasern mit $w_{eff}$ = 4,5 μm.

Figur 3 zeigt das Profil einer weiteren erfindungsgemäßen Triple-Clad-Faser mit Parabelprofil des Faserkerns. Die charakteristischen Daten der Faser sind:

$2\Delta_0$ = 8.68·10⁻³ (maximale Brechzahl im Faserkern, der tatsächliche Profilverlauf $\Delta(r)$ liegt nur bei r = 0 bei diesem Wert und fällt dann ab)
$2\Delta_1$ = -2,06·10⁻³
$2\Delta_2$ = 3,0·10⁻³
Radien(-verhältnisse) a = 13.0μm, $r_1$/a = 0,3 und $r_2$/a = 0,8.
Die Grenzwellenlänge dieser Faser beträgt $\lambda_c$ = 1482 nm.

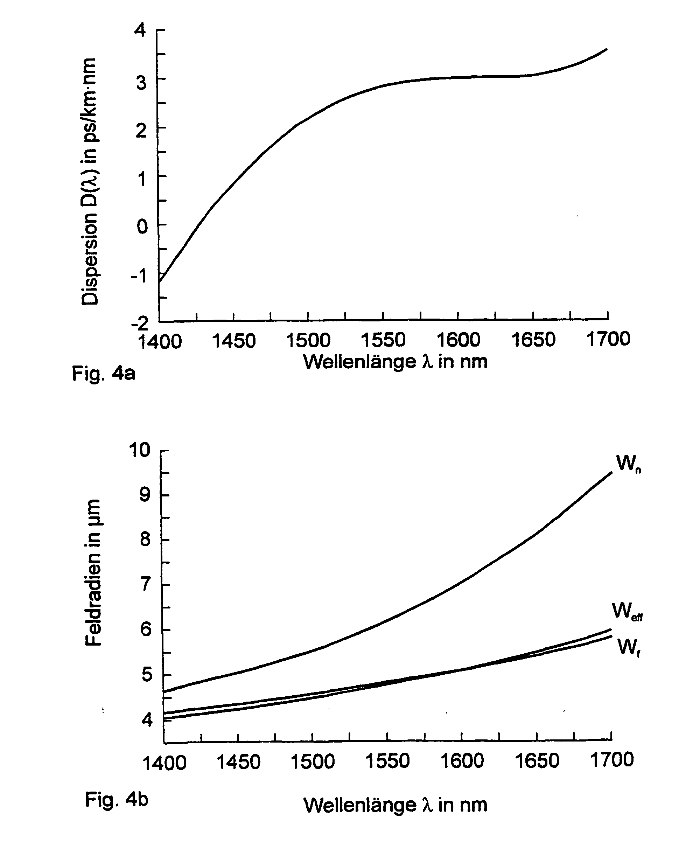

In Figur 4a ist wiederum der spektrale Verlauf der chromatischen Dispersion D($\lambda$) und in Figur 4b sind die spektralen Modenfeldradiuskurven $w_f$, $w_n$ und $w_{eff}$ dargestellt. Zwischen 1450 und 1650 nm ist die Dispersion positiv und bleibt unter 3ps/km*nm.

Figur 5 zeigt das Profil einer weiteren erfindungsgemäßen Triple-Clad-Faser mit Dreiecksprofil des Faserkerns. Die charakteristischen Daten der Faser sind:

$2\Delta_0$ (max)= 10,62·10⁻³ (maximale Brechzahl im Faserkern)
$2\Delta_1$ = -1,81·10⁻³,
$2\Delta_2$ = 2,5·10⁻³,
Radien(-verhältnisse) a = 13,9μm, $r_1$/a = 0,3 und $r_2$/a = 0,8. Die
Grenzwellenlänge ist $\lambda_c$ = 1482 nm.

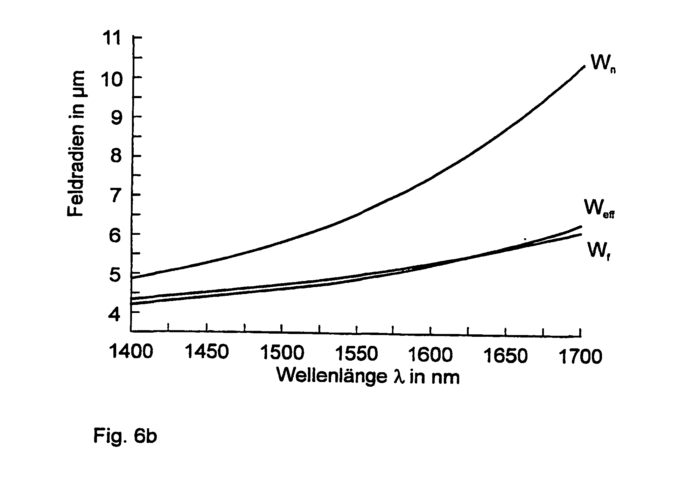

Figur 6 zeigt den spektrale Verlauf der chromatischen Dispersion und die spektralen Modenfeldradiuskurven. Zwischen 1450 und 1650 nm ist wiederum die Dispersion positiv und bleibt bei geringer Steigung unter 3.1 ps/km·nm.

Für die dargestellten Profile und die angegebenen Parameter wurde eine Toleranzanalyse durchgeführt, bei welcher die relativen Brechzahlen $\Delta_i$ und der Radius a jeweils um ±1% abgeändert wurden. Bei den Werten $r_i$/ a wurde eine absolute Änderung um ±0,005 angenommen. Es zeigt sich, daß sich die Grenzwellenlänge bei einer einzelnen Parameteränderung um maximal etwa 15 nm ändert, wobei die größte Abweichung bei Änderung des Kernradius a auftritt. Hinsichtlich des Dispersionsverlaufs führen die Parameteränderungen zu einer Abweichung von maximal ±2 ps/km*nm, was ebenfalls zu tolerierbaren Dispersionswerten führt. Der Feldradius $w_n$ ändert sich um maximal ±0,5 μm, während die Feldradien $w_{eff}$ und $w_f$ weitgehend stabil sind.

Insgesamt kann die Empfindlichkeit gegenüber Parameteränderungen als technologisch beherrschbar eingeschätzt werden. Da bei den erfindungsgemäßen Fasern die Wellenleiterdispersion in das Dispersionsverhalten eingeht, ist eine etwas höhere Parameterempfindlichkeit als bei Standardfasern bei 1300 nm zu erwarten. Diese Empfindlichkeiten liegen aber weit unter denen von Dispersionskompensationsfasern, die ihrerseits routinemäßig herstellbar sind.

Gewerbliche Anwendbarkeit:

Die erfindungsgemäßen Fasern eignen sich in vorteilhafter Weise zur optischen Datenübertragung im dritten optischen Fenster und somit für neu aufzubauende hochbitratige optische Kommunikationsnetzwerke. Wegen der gegenüber Standardfasern stark verringerten Dispersion ist die erfindungsgemäße Faser speziell für den Wellenlängenmultiplexbetrieb geeignet, wobei bei hoher Übertragungsqualität hohe Übertragungsraten erzielt werden.

**Patentansprüche**

1. Optische Single-Mode-Lichtleitfaser mit geringer Dispersion für den Wellenlängenmultiplexbetrieb (WDM) einer optischen Übertragungsstrecke, bestehend aus einem zentralen Faserkern mit dem Radius $r_1$, zwei inneren Fasermantelschichten mit dem Außenradius $r_2$ bzw. Außenradius a mit a > $r_2$ und einer äußeren Fasermantelschicht, wobei

   - für die Radien $r_1$, $r_2$ und a die Beziehungen $8{,}0\mu m \leq a \leq 16\mu m$, $0{,}15 \leq r_1/a \leq 0{,}4$, und $0{,}65 \leq r_2/a \leq 0{,}85$ gelten und das Brechungsindexprofil n(r) der Faser als Funktion des Faserradius r nicht konstant ist,
   - die äußere Fasermantelschicht, d.h. für den Bereich r > a, ein relatives Brechungsindexprofil $\Delta$(r) mit

$$\Delta(r) = \frac{1}{2}\left(\frac{n(r)^2}{n_c^{\,2}}-1\right)$$

   aufweist, für welches $\Delta(r) \approx 0$ gilt, wobei $n_c$ ein konstanter Bezugsbrechungsindex ist
   - und für das relative Brechungsindexprofil $\Delta$(r) mit

$$\Delta(r) = \frac{1}{2}\left(\frac{n(r)^2}{n_c^{\,2}}-1\right)$$

   der Faser in der ersten inneren Fasermantelschicht, d.h. für $r_1 < r \leq r_2$, $0 \geq \Delta(r) \geq \Delta_1$ gilt, wobei $-2{,}0\cdot10^{-3} \leq \Delta_1 \leq -0{,}6\cdot10^{-3}$;

   **dadurch gekennzeichnet,**
   **daß** für das relative Brechungsindexprofil $\Delta$(r) mit

$$\Delta(r) = \frac{1}{2}\left(\frac{n(r)^2}{n_c^{\,2}}-1\right)$$

   der
   Faser folgendes gilt:

   a) im Faserkern, d.h. für $r \leq r_1$, gilt $\Delta_0 \geq \Delta(r) \geq 0$, wobei $3{,}5\cdot10^{-3} \leq \Delta_0 \leq 6{,}0\cdot10^{-3}$;
   b) in der zweiten inneren Fasermantelschicht, d.h. für $r_2 < r \leq a$, gilt $\Delta_2 \geq \Delta(r) \geq 0$, wobei $1{,}0\cdot10^{-3} \leq \Delta_2 \leq 2{,}0\cdot10^{-3}$,

   so daß die Faser im Wellenlängenbereich zwischen 1400 nm und 1700 nm einen Dispersionswert zwischen -1,6 und +3,7 ps/(nm•km) aufweist.

2. Lichtleitfaser nach Anspruch 1, **dadurch gekennzeichnet, daß** für den Radius $r_1$ gilt:
   $2{,}5~\mu m \leq r_1 \leq 5{,}5~\mu m$, vorzugsweise $3{,}5~\mu m \leq r_1 \leq 4{,}5~\mu m$.

3. Lichtleitfaser nach Anspruch 1, **dadurch gekennzeichnet, daß** für den Radius $r_2$ gilt:
   $8~\mu m~5 \leq r_2 \leq 12~\mu m$, vorzugsweise $9~\mu m \leq r_2 \leq 11~\mu m$.

4. Lichtleitfaser nach Anspruch 1, **dadurch gekennzeichnet, daß** für den Radius a gilt: $9~\mu m \leq a \leq 15~\mu m$.

5. Lichtleitfaser nach Anspruch 1 oder 4, **dadurch gekennzeichnet, daß** sich der Wert $\Delta_1$ innerhalb folgender Grenzen bewegt: $-1{,}2\cdot10^{-3} \leq \Delta_1 \leq -0{,}6\cdot10^{-3}$;

6. Lichtleitfaser nach Anspruch 1, 4 oder 5, **dadurch gekennzeichnet, daß** das Brechungsindexprofil im Bereich des Faserkerns rechteckförmig, dreieckförmig, trapezförmig oder parabelähnlich verläuft, wobei $\Delta$(r) den maximalen relativen Wert $\Delta_0$ zumindest im Bereich des Fasermittelpunkts für r = 0 annimmt.

7. Lichtleitfaser nach Anspruch 1 oder 5, **dadurch gekennzeichnet, daß** das Brechungsindexprofil im Bereich des Faserkerns rechteckförmig verläuft, wobei gilt:

   a) $3{.}7{\cdot}10^{-3} \leq \Delta_0 \leq 4{,}6\cdot10^{-3}$, vorzugsweise $\Delta_0 \approx 4{,}16\cdot10^{-3}$ ;
   b) $-1{,}8\cdot10^{-3} \leq D_1 \leq -1{,}4\cdot10^{-3}$, vorzugsweise $\Delta_1 \approx 1{,}59\cdot10^{-3}$;
   c) $1{,}6\cdot10^{-3} \leq \Delta_2 \leq 1{,}9\cdot10^{-3}$, vorzugsweise $\Delta_2 \approx 1{,}75\cdot10^{-3}$;
   d) $9{,}4~\mu m \leq a \leq 11{.}4~\mu m$, wobei vorzugsweise $a \approx 10{.}4\mu m$ , $r_1/a \approx 0{,}3$ und $r_2/a = 0{,}8$ gilt.

8. Lichtleitfaser nach Anspruch 1 oder 5, **dadurch gekennzeichnet, daß** das Brechungsindexprofil im Bereich des Faserkerns dreieckförmig verläuft, wobei gilt:

   a) $4{,}7\cdot10^{-3} \leq \Delta_0 \leq 5{,}8\cdot10^{-3}$, vorzugsweise $\Delta_0 \approx 5{,}31\cdot10^{-3}$ ;
   b) $-1{,}0\cdot10^{-3} \leq \Delta_1 \leq -0{,}8\cdot10^{-3}$, vorzugsweise $\Delta_1 \approx -0{.}9\cdot10^{-3}$;
   c) $1{,}1\cdot10^{-3} \leq \Delta_2 \leq 1{,}4\cdot10^{-3}$, vorzugsweise $\Delta_2 \approx 1{,}25\cdot10^{-3}$;
   d) $12{,}9~\mu m \leq a \leq 14{,}9~\mu m$, wobei vorzugsweise $a = 13{,}9~\mu m$, $r_1/a \approx 0{,}3$ und $r_2/a \approx 0{,}8$ gilt.

9. Lichtleitfaser nach Anspruch 1 oder 5 , **dadurch gekennzeichnet, daß** das Brechungsindexprofil im Bereich des Faserkerns parabelförmig verläuft, wobei gilt:

a) $3{,}9.10^{-3} \leq \Delta_0 \leq 4{,}8 \cdot 10^{-3}$, vorzugsweise $\Delta_0 \approx 4, 34 \cdot 10^{-3}$;
b) $-1, 1 \cdot 10^{-3} \leq \Delta_1 \leq -0, 9 \cdot 10^{-3}$, vorzugsweise $\Delta_1 \approx -1.03 \cdot 10^{-3}$;
c) $1{,}3 \cdot 10^{-3} \leq \Delta_2 \leq 1{,}7 \cdot 10^{-3}$, vorzugsweise $\Delta_2 \approx 1{,}5 \cdot 10^{-1}$;
d) $12{,}0 \, \mu m \leq a \leq 14{,}0 \, \mu m$, wobei vorzugsweise $a \approx 13{,}0 \, \mu m$, $r_1/a \approx 0{,}3$ und $r_2/a \approx 0{,}8$ gilt.

**10.** Lichtleitfaser nach Anspruch 1 oder 5, **dadurch gekennzeichnet, daß** der relative Brechungsindex $\Delta$ (r) im Bereich der inneren Fasermantelschichten konstant ist und etwa $\Delta_1$ bzw. $\Delta_2$ beträgt.

**11.** Lichtleitfaser nach Anspruch 1 oder 5, **dadurch gekennzeichnet, daß** die Faser im wesentlichen aus Quarzglas besteht, welches zur Erhöhung oder Absenkung des Brechungsindex im Kern und in den Mantelschichten mit entsprechenden brechzahländernden Materialien, vorzugsweise Germanium bzw. Fluor, dotiert ist.

**12.** Lichtleitfaser nach einem der vorangegangenen Ansprüche, **dadurch gekennzeichnet, daß** sie im Wellenlängenbereich von etwa 1400 bis 1700 nm eine Dispersion von etwa 3 ps/(km nm) aufweist.

**Claims**

**1.** Single-mode optical fibre with low dispersion for wavelength division multiplexing (WDM) in an optical transmission link, consisting of a central fibre core of radius $r_1$, two inner fibre sheath layers of outside radius $r_2$ and outside radius a where $a > r_2$ and an outer fibre sheath layer, wherein

- for the radii $r_1$, $r_2$ and a there apply the relations $8.0 \mu m \leq a \leq 16 \mu m$, $0.15 \leq r_1/a \leq 0.4$ and $0.65 \leq r_2/a \leq 0.85$ and the refractive index profile n(r) of the fibre as a function of fibre radius r is not constant;
- the outer fibre sheath layer, i.e. for the region $r > a$, has a relative refractive index profile $\Delta(r)$ where

$$\Delta(r) = \frac{1}{2}(\frac{n(r)^2}{n_c^2} - 1),$$

for which there applies $\Delta(r) \approx 0$, $n_c$ being a constant reference refractive index
- and for the relative refractive index profile $\Delta(r)$ where

$$\Delta(r) = \frac{1}{2}(\frac{n(r)^2}{n_c^2} - 1),$$

of the fibre in the first inner fibre sheath layer, i.e. for $r_1 < r \leq r_2$, there applies $0 \geq \Delta(r) \geq \Delta_1$, where $-2.0 \cdot 10^{-3} \leq \Delta_1 \leq -0.6 \cdot 10^{-3}$;

**characterized in that**
for the relative refractive index profile $\Delta(r)$ where

$$\Delta(r) = \frac{1}{2}(\frac{n(r)^2}{n_c^2} - 1)$$

of the fibre there applies the following:

a) in the fibre core, i.e. for $r \leq r_1$, there applies $\Delta_0 \geq \Delta(r) \geq 0$, where $3.5 \cdot 10^{-3} \leq \Delta_0 \leq 6.0 \cdot 10^{-3}$;
b) in the second inner fibre sheath layer, i.e. for $r_2 < r \leq a$, there applies $\Delta_2 \geq \Delta(r) \geq 0$, where $1.0 \cdot 10^{-3} \leq \Delta_2 \leq 2.0 \cdot 10^{-3}$,

with the result that, in the wavelength range between 1400 nm and 1700 nm, the fibre has a dispersion value between -1.6 and +3.7 ps/(nm·km).

**2.** Optical fibre according to claim 1, **characterized in that**
for radius $r_1$ there applies:
$2.5 \, \mu m \leq r_1 \leq 5.5 \, \mu m$, preferably $3.5 \, \mu m \leq r_1 \leq 4.5 \, \mu m$.

**3.** Optical fibre according to claim 1, **characterized in that**
for radius $r_2$ there applies:
$8 \, \mu m \leq r_2 \leq 12 \, \mu m$, preferably $9 \, \mu m \leq r_2 \leq 11 \, \mu m$.

**4.** Optical fibre according to claim 1, **characterized in that**
for radius a there applies: $9 \, \mu m \leq a \leq 15 \, \mu m$.

**5.** Optical fibre according to claim 1 or 4, **characterized in that**
the value $\Delta_1$ moves within the following limits:
$-1.2 \cdot 10^{-3} \leq \Delta_1 \leq -0.6 \cdot 10^{-3}$.

**6.** Optical fibre according to claim 1, 4 or 5, **characterized in that** the refractive index profile in the region of the fibre core is rectangular, triangular, trapezoidal or parabola-like, wherein $\Delta(r)$ assumes the maximum relative value $\Delta_0$ at least in the region of the fibre centre for $r = 0$.

**7.** Optical fibre according to claim 1 or 5, **characterized in that**
the refractive index profile in the region of the fibre core is rectangular, wherein there applies:

a) $3.7 \cdot 10^{-3} \leq \Delta_0 \leq 4.6 \cdot 10^{-3}$, preferably $\Delta_0 = 4.16 \cdot 10^{-3}$;
b) $-1.8 \cdot 10^{-3} \leq \Delta_1 \leq -1.4 \cdot 10^{-3}$ preferably $\Delta_1 = -1.59 \cdot 10^{-3}$;
c) $1.6 \cdot 10^{-3} \leq \Delta_2 \leq 1.9 \cdot 10^{-3}$, preferably $\Delta_2 = 1.75 \cdot 10^{-3}$;
d) $9.4 \ \mu m \leq a \leq 11.4 \ \mu m$, where preferably $a = 10.4 \ \mu m$, $r_1/a = 0.3$ and $r_2/a = 0.8$.

8. Optical fibre according to claim 1 or 5, **characterized in that**
the refractive index profile in the region of the fibre core is triangular, wherein there applies:

a) $4.7 \cdot 10^{-3} \leq \Delta_0 \leq 5.8 \cdot 10^{-3}$, preferably $\Delta_0 = 5.31 \cdot 10^{-3}$;
b) $-1.0 \cdot 10^{-3} \leq \Delta_1 \leq -0.8 \cdot 10^{-3}$, preferably $\Delta_1 = -0.9 \cdot 10^{-3}$;
c) $1.1 \cdot 10^{-3} \leq \Delta_2 \leq 1.4 \cdot 10^{-3}$, preferably $\Delta_2 = 1.25 \cdot 10^{-3}$;
d) $12.9 \cdot \mu m \leq a \leq 14.9 \ \mu m$, where preferably $a = 13.9 \ \mu m$, $r_1/a = 0.3$ and $r_2/a = 0.8$.

9. Optical fibre according to claim 1 or 5, **characterized in that**
the refractive index profile in the region of the fibre core is parabola-like, wherein there applies:

a) $3.9 \cdot 10^{-3} \leq \Delta_0 \leq 4.8 \cdot 10^{-3}$, preferably $\Delta_0 = 4.34 \cdot 10^{-3}$;
b) $-1.1 \cdot 10^{-3} \leq \Delta_1 \leq -0.9 \cdot 10^{-3}$, preferably $\Delta_1 = -1.03 \cdot 10^{-3}$;
c) $1.3 \cdot 10^{-3} \leq \Delta_2 \leq 1.7 \cdot 10^{-3}$, preferably $\Delta_2 = 1.5 \cdot 10^{-3}$;
d) $12.0 \ \mu m \leq a \leq 14.0 \ \mu m$, where preferably $a = 13.0 \ \mu m$, $r_1/a = 0.3$ and $r_2/a = 0.8$.

10. Optical fibre according to claim 1 or 5, **characterized in that**
the relative refractive index $\Delta(r)$ in the region of the inner fibre sheath layers is constant and amounts approximately to $\Delta_1$ or $\Delta_2$.

11. Optical fibre according to claim 1 or 5, **characterized in that**
the fibre consists essentially of quartz glass, wherein, in order to increase or reduce the refractive index in the core and in the sheath layers, said quartz glass is doped with corresponding refractive-index-modifying materials, preferably germanium or fluorine.

12. Optical fibre according to any one of the preceding claims, **characterized in that**,
in the wavelength range from approximately 1400 to 1700 nm, said optical fibre has a dispersion of approximately 3 ps/(km nm).

## Revendications

1. Fibre monomode à faible dispersion destinée au multiplexage par répartition en longueur d'onde (WDM) d'une liaison de transmission optique, composée d'un noyau central de fibre de rayon $r_1$, de deux couches internes de gaine optique de rayon extérieur $r_2$ ou de rayon extérieur a avec $a > r_2$ et une couche extérieur de gaine optique,

- les relations $8,0\mu m \leq a \leq 16\mu m$, $0,15 \leq r_1/a \leq 0,4$ et $0,65 \leq r_2/a \leq 0,85$ étant valables pour les rayons $r_1$, $r_2$ et a, et le profil d'indice de réfraction $n(r)$ de la fibre en fonction du rayon de la fibre n'étant pas constant,
- la couche extérieure de la gaine optique, c'est-à-dire pour la zone $r > a$, présentant un profil d'indice de réfraction relatif $\Delta(r)$ avec $\Delta(r) = \frac{1}{2}(n(r)^2/n_c^2 - 1)$ pour lequel $\Delta(r) \approx 0$ est valable, $n_c$ étant un indice de réfraction de référence constant
- et $0 \geq \Delta(r) \geq \Delta_1$ étant valable pour le profil d'indice de réfraction relatif $\Delta(r)$ avec $\Delta(r) = \frac{1}{2}(n(r)^2/n_c^2 - 1)$ de la fibre dans la première couche interne de gaine optique, c'est-à-dire pour $r_1 < r \leq r_2$, $0 \geq \Delta(r) \geq \Delta_1$ avec $-2,0 \cdot 10^{-3} \leq \Delta_1 \leq -0,6 \cdot 10^{-3}$;

**caractérisée en ce que**
les relations suivantes sont valables pour le profil d'indice de réfraction $\Delta(r)$ avec $\Delta(r) = \frac{1}{2}(n(r)^2/n_c^2 - 1)$ de la fibre :

a) $\Delta_0 \geq \Delta(r) \geq 0$ est valable dans le noyau de la fibre, c'est-à-dire pour $r \leq r_1$, avec $3,5 \cdot 10^{-3} \leq \Delta_0) \leq 6,0 \cdot 10^{-3}$;
b) $\Delta_2 \geq \Delta(r) \geq 0$ est valable dans la seconde couche interne de gaine optique, c'est-à-dire pour $r_2 < r \leq a$, avec $1,0 \cdot 10^{-3} \leq \Delta_2 \leq 2,0 \cdot 10^{-3}$,

de telle sorte que la fibre indique une valeur de dispersion comprise entre -1,6 et +3,7 ps/(nm*km) dans la bande des longueurs d'onde entre 1400 nm et 1700 nm.

2. Fibre optique selon la revendication 1, **caractérisée en ce qu'**est valable pour le rayon d'action $r_1$ : $2,5 \ \mu m \leq r_1 \leq 5,5 \ \mu m$, de préférence $3,5 \ \mu m \leq r_1 \leq 4,5 \ \mu m$.

3. Fibre optique selon la revendication 1, **caractérisée en ce qu'**est valable pour le rayon d'action $r_2$ : $8 \ \mu m \leq r_2 \leq 12 \ \mu m$, de préférence $9 \ \mu m \leq r_2 \leq 11 \ \mu m$.

4. Fibre optique selon la revendication 1, **caractérisée en ce qu'**est valable pour le rayon d'action a $9 \ \mu m \leq a \leq 15 \ \mu m$.

5. Fibre optique selon la revendication 1 ou 4, **carac-**

térisée en ce que
la valeur $\Delta_1$ se situe à l'intérieur des limites suivantes : $-1,2*10^{-3} \leq \Delta_1 \leq -0,6*10^{-3}$ ;

6. Fibre optique selon les revendications 1, 4 ou 5, **caractérisée en ce que**
le profil d'indice de réfraction évolue dans la zone du noyau de la fibre de manière rectangulaire, triangulaire, trapézoïdale ou parabolique, $\Delta(r)$ adoptant la valeur maximale relative $\Delta_0$ au moins dans la zone du centre de la fibre pour r = 0.

7. Fibre optique selon la revendication 1 ou 5, **caractérisée en ce que**
le profil d'indice de réfraction évolue de manière rectangulaire dans la zone du noyau de la fibre, avec:

   a) $3,7*10^{-3} \leq \Delta_0 \leq 4,6*10^{-3}$, de préférence $\Delta_0 \approx 4,16*10^{-3}$;
   b) $-1,8*10^{-3} \leq \Delta_1 \leq -1,4*10^{-3}$, de préférence $\Delta_1 \approx -1,59*10^{-3}$;
   c) $1,6*10^{-3} \leq \Delta_2 \leq 1,9*10^{-3}$, de préférence $\Delta_2 \approx 1.75*10^{-3}$;
   d) $9,4\ \mu m \leq a \leq 11,4\ \mu m$, de préférence a = 10,4 $\mu m$, $r_1/a = 0,3$ et $r_2/a = 0,8$.

8. Fibre optique selon la revendication 1 ou 5, **caractérisée en ce que**
le profil d'indice de réfraction évolue de manière triangulaire dans la zone du noyau de la fibre, avec :

   a) $4,7*10^{-3} \leq \Delta_0 \leq 5,8.10^{-3}$, de préférence $\Delta_0 \approx 5,31*10^{-3}$;
   b) $-1,0*10^{-3} \leq \Delta_1 \leq -0,8.10^{-3}$, de préférence $\Delta_1 \approx -0,9*10^{-3}$;
   c) $1.1*10^{-3} \leq \Delta_2 \leq 1,4.10^{-3}$, de préférence $\Delta_2 \approx 1,25*10^{-3}$;
   d) $12,9\ \mu m \leq a \leq 14,9\ \mu m$, de préférence a = 13,9 $\mu m$, $r_1/a = 0,3$ et $r_2/a = 0,8$.

9. Fibre optique selon la revendication 1 ou 5, **caractérisée en ce que**
le profil d'indice de réfraction évolue de manière parabolique dans la zone du noyau de la fibre, avec :

   a) $3,9*10^{-3} \leq \Delta_0 \leq 4,8\cdot10^{-3}$, de préférence $\Delta_0 \approx 4,34*10^{-3}$;
   b) $-1,1*10^{-3} \leq \Delta_1 \leq -0,9.10^{-3}$, de préférence $\Delta_1 \approx -1,03*10^{-3}$;
   c) $1,3*10^{-3} \leq \Delta_2 \leq 1,7.10^{-3}$, de préférence $\Delta_2 \approx 1.5*10^{-3}$;
   d) $12,0\ \mu m \leq a \leq 14,0\ \mu m$, de préférence a = 13,0 $\mu m$, $r_1/a = 0,3$ et $r_2/a = 0,8$.

10. Fibre optique selon la revendication 1 ou 5, **caractérisée en ce que**
l'indice de réfraction relatif $\Delta(r)$ est constant dans la zone des couches internes de gaine optique et est d'environ $\Delta_1$ ou $\Delta_2$.

11. Fibre optique selon la revendication 1 ou 5, **caractérisée en ce que**
la fibre est composée pour l'essentiel de verre de quartz, dopé de matériaux modifiant les indices de réfraction, de préférence du germanium ou du fluor, destiné à l'augmentation ou à la diminution de l'indice de réfraction dans le noyau et dans les couches de gaine optique.

12. Fibre optique selon l'une des revendications précédentes,
**caractérisée en ce qu'**elle présente une dispersion d'environ 3 ps/(km nm) dans la bande des longueurs d'onde entre 1400 et 1700 nm environ.

Fig. 1

Fig. 2a

Fig. 2b

Fig. 3

Fig. 4a

Fig. 4b

Fig. 5

Fig. 6a

14

Fig. 6b